# NOUVEAU FASCICULE DE BREVET EUROPEEN

(11) **EP 0 608 525 B2**
(45) Date de publication et mention de la décision concernant l'opposition: **29.03.2000**
(45) Mention de la délivrance du brevet: 05.03.1997
(21) Numéro de dépôt: 93119911.1
(22) Date de dépôt: 10.12.1993
(51) Int. Cl.: A23C 9/142, A23C 9/15

(54) **Procédé de préparation d'une composition laitière**
Verfahren zur Herstellung von einer Milchzusammensetzung
Process for the preparation of a milk composition

(30) Priorité: 28.12.1992 CH 397192; 18.05.1993 EP 93810367
(43) Date de publication de la demande: 03.08.1994
(73) Titulaire: SOCIETE DES PRODUITS NESTLE S.A., 1800 Vevey (CH)
(72) Inventeur: Behringer, Reinhard, CH-1066 Epalinges (CH); Berrocal, Rafael, CH-1806 St-Legier (CH); Jost, Rolf, CH-1814 La Tour-de-Peilz (CH)
(74) Mandataire: Archambault, Jean

(56) Documents cités:
- AT-B- 390 870
- FR-A- 2 252 057
- FR-A- 2 644 983

## Description

La présente invention a pour objet un procédé de préparation d'une composition laitière.

Le lait évaporé se caractérise par une concentration relativement élevée en minéraux présents dans sa phase soluble, en particulier les ions non liés à la micelle de caséine tels que les cations sodium et potassium et les anions chlorure, certains phosphates et citrates. Jusqu'à présent, on a surtout cherché à stabiliser le lait évaporé lors du processus technologique de concentration par évaporation en y ajoutant des sels de stabilisation, tels que les citrates et phosphates de manière à protéger les protéines lors des traitements thermiques de conservation et à éviter l'épaississement et la séparation des phases à l'entreposage. Ces sels, en augmentant encore la teneur en minéraux non liés à la micelle, ont pour effet de détériorer les qualités organoleptiques du lait, en particulier son goût. Par ailleurs, les traitements thermiques contribuent à la stabilisation du lait évaporé mais affectent son goût et sa blancheur.

On connaît, par exemple de FR-A-2 644 983, un procédé de préparation d'une composition liquide qui utilise la microfiltration ou l'ultrafiltration du lait maigre afin de produire, à base d'un rétentat réduit en lactose, une composition dans laquelle le lactose est remplacé par un sucre non laitier, par exemple un sucre de fruits et de l'amidon. La composition globale de ce produit ne correspond plus à celle du lait.

Le but de l'invention est de fournir un procédé de préparation d'une composition laitière proche du lait, à base des composants naturels du lait et dont les caractéristiques organoleptiques et diététiques sont nettement améliorées par rapport au lait évaporé.

Le procédé selon l'invention est caractérisée par le fait que la composition obtenue contient, en poids des matières solides non grasses, 33 à 36 % de protéine, 48 à 58 % de lactose et 3 à 5 % de minéraux et que parmi les minéraux le calcium a une teneur de 75 à 100 % de celle du lait, le phosphore de 50 à 75 % de celle du lait, le sodium et le potassium chacun de 5 à 20 % de celles du lait et les citrates de 10 à 30 % de celle du lait.

Dans la définition de l'invention qui précède, ainsi que dans la suite de l'exposé, les % et teneurs exprimés proviennent de l'analyse des matières par les méthodes d'analyse courantes appliquées au lait.
Dans le cadre de l'invention, le lait peut provenir de toute femelle laitière mammifère, par exemple de bovin, de caprin ou d'ovin.

La composition obtenue selon l'invention peut être sous forme liquide concentrée, par exemple à 20-30 % en poids de matières sèches non grasses ou plus ou moins diluée par reconstitution avec l'eau ou un liquide aqueux. Elle peut contenir jusqu'à 15 % en poids de matières grasses. Elle peut également se présenter sous forme d'une poudre après séchage, par exemple par pulvérisation, destinée à être reconstituée sous forme liquide par addition d'eau ou d'un liquide aqueux.

On a constaté que la composition selon l'invention possède des propriétés organoleptiques remarquables caractérisées par une douceur augmentée et un goût franc et frais par rapport au lait et à fortiori par rapport au lait évaporé, ainsi qu'une blancheur améliorée par rapport au lait évaporé. De plus, elle présente, sous forme concentrée, une stabilité remarquable à l'entreposage, sans dépôt de sels, par exemple de citrate de calcium.

L'invention concerne un procédé de préparation d'une composition précédente, caractérisé par le fait que l'on concentre un lait écrémé par ultrafiltration ou microfiltration jusqu'à un facteur de 3 à 6 fois en volume et que l'on dissout dans le rétentat une quantité de lactose correspondant, en poids, à environ la quantité de matières sèches du rétentat.

De préférence, on pasteurise le lait écrémé de départ.

Selon un premier mode de mise en oeuvre du procédé, on sèche le mélange liquide précédent, par exemple par pulvérisation ou lyophilisation.

Selon un second mode de réalisation du procédé, on mélange le concentrat liquide avec de la crème préalablement stérilisée, on homogénéise le mélange, puis on le conditionne hermétiquement dans des récipients et on stérilise les récipients, par exemple en autoclave.

Dans un mode de réalisation préféré du procédé selon l'invention, on stérilise séparément le rétentat et une solution aqueuse de lactose, on mélange aseptiquement le rétentat et la solution de lactose, on y ajoute de la matière grasse lactique préalablement stérilisée, on homogénéise le mélange et on le conditionne aseptiquement dans des emballages.
Le cas échéant, on post-stérilise le mélange dans des conditions thermiques modérées avant de le conditionner aseptiquement.

En variante des opérations suivant l'homogénéisation, on peut conditionner le mélange homogénéisé dans des récipients que l'on ferme hermétiquement, puis que l'on stérilise dans des conditions thermiques modérées, par exemple en autoclave.

Dans le procédé de l'invention, on préfère concenter du lait maigre préalablement pasteurisé en utilisant la microfiltration sur membranes minérales présentant de préférence une porosité d'environ 0,1 à 0,2 µm (microns). La microfiltration qui permet un meilleur débit de perméation et un niveau de concentration supérieur à ceux obtenus par l'ultrafiltration, par exemple jusqu'à 6 fois en volume. A la différence de l'ultrafiltration qui permet la rétention des protéines de lactosérum, la microfiltration les élimine en grande partie.
Dans une version particulièrement préférée de ce procédé, on continue la microfiltration par une opération de lavage ou diafiltration, à volume constant, par exemple avec de l'eau déminéralisée de volume environ 3 fois celui du rétentat. L'objectif de cette opération est une réduction supplémentaire des minéraux non liés à la micelle de caséine, en particulier les cations sodium et potassium. Après la diafiltration, on peut de préférence concentrer à nouveau, par exemple jusqu'à obtenir une teneur en matières sèches d'environ 20% en poids.

On peut désirer maintenir une partie des protéines de lactosérum dans le rétentat tout en utilisant la microfiltration dans le but d'augmenter la teneur en matières sèches d'origine protéique. Pour ce faire, on traite thermiquement le lait maigre de départ dans des conditions relativement sévères, à une température de 90°C à 140°C et pendant une durée de 20 s à 10 min, la température la plus haute correspondant à la durée la plus courte et vice versa. Ce traitement provoque l'aggrégation des protéines de lactosérum et la rétention des aggrégats.

Le perméat de la microfiltration constitue une matière première intéressante qui peut être déminéralisée, par exemple par échange d'ions et/ou par électrodialyse, pour être utilisée, par exemple dans des produits infantiles.
Lorsqu'il provient de la microfiltration, ce perméat a en sus l'avantage d'être pauvre en germes.

Comme évoqué précédemment, le procédé préféré est celui dans lequel le rétentat et le lactose sont stérilisés séparément l'un de l'autre. Pour ce faire, on stérilise de préférence le rétentat par ultra haute température (UHT), à 120-150°C et de préférence à 130-140°C. La stérilisation a lieu par maintien à cette température pendant 15 à 60 s. Le lactose est dissout dans de l'eau déminéralisée chaude à la concentration la plus haute possible, par exemple à saturation. La stérilisation du lactose est mise en oeuvre dans des conditions de température et de durée comparables à celles appliquées au rétentat, ce qui provoque une redissolution du lactose restant le cas échéant en suspension. Cette solution de lactose, une fois stérilisée, est maintenue à une température de 50°C ou plus, et mélangée au rétentat de préférence à 50-60°C de manière à éviter une recristallisation du lactose avant et pendant le mélange. De préférence le pH (mesuré à 50-60°C) est ajusté si nécessaire une valeur > à 6,8, par exemple par addition d'une solution aqueuse d'hydroxyde de calcium.

Après addition de la matière grasse lactique ayant été préalablement stérilisée, sous forme d'huile de beurre ou de crème, l'homogénéisation ultérieure s'effectue de préférence à 50-55°C, en deux étages, par exemple à une pression de 10-30 MPa pour le premier étage et de 2,5-5 MPa pour le second.

Quelle que soit la variante de l'étape de post-stérilisation, par exemple par UHT ou en autoclave, les conditions utilisées correspondent à un traitement thermique modéré, de préférence, dans le cas d'un traitement UHT à 135-145°C pendant 3-5 s, par exemple à environ 140°C pendant 3 s, respectivement à 120-125°C pendant 1-3 min. et par exemple à environ 121°C pendant 2 min. dans le cas d'un traitement en autoclave.
Il est possible de mettre en oeuvre des conditions de traitement douces puisque les germes ont été complétement inactivés lors des traitements relativement sévères de stérilisation du rétentat et du lactose. De cette manière, on minimise l'effet de la réaction de Maillard.

La composition laitière obtenue constitue une base caractérisée par d'excellentes qualités de douceur et de goût pour des produits tels que des concentrés, desserts, produits culinaires ou diététiques, par exemple pauvres en sodium.

Les exemples ci-après illustrent l'invention. Dans ceux-ci, les parties et pourcentages sont en poids, sauf indication contraire.

### Exemple 1

On pasteurise 250 kg de lait maigre à 72°C pendant 14 s, puis on le soumet à une microfiltration tangentielle sur un module Techsep S 151 équipé de membranes Carbosep M 14 de surface totale 3,2 m². On effectue l'opération à 50°C jusqu'à ce que le rapport des volumes lait/rétentat soit 6. A ce stade la teneur en matières sèches du rétentat est 24% et le flux de perméation le 1/3 de sa valeur initiale. On ajuste alors sa teneur en matières sèches à 20% et on y ajoute du lactose à raison de 2 kg de lactose pour 10 kg de rétentat. On agite le mélange à 50°C jusqu'à complète dissolution du lactose, puis on le sèche par lyophilisation.

La poudre obtenue a la composition indiquée dans le tableau 1 ci-après en comparaison avec celle du lait maigre, exprimées en % des matières solides totales (y compris l'humidité résiduelle).

**Tableau 1**

| **Constituant** | **% des matières solides totales** | |
|---|---|---|
| | Exemple 1 | Lait maigre |
| Protéine (N x 6,38) | 35 | 35 |
| Matière grasse | 1 | 1 |
| Lactose | 57,6 | 51,9 |
| Cendres | 4,2 | 7,8 |
| Citrate | 0,5 | 1,7 |

| Cendres, dont | | |
|---|---|---|
| Calcium | 1,1 | 1,3 |
| Phosphore | 0,7 | 1,0 |
| Potassium | 0,3 | 1,6 |
| Sodium | 0,1 | 0,6 |

Après reconstitution avec de l'eau déminéralisée pour obtenir 48 g de lactose/kg, la composition liquide obtenue à partir de la poudre a été évaluée organoleptiquement en comparaison avec un lait maigre pasteurisé de même teneur en lactose ainsi qu'avec une poudre de lait maigre séchée par pulvérisation à basse température et reconstituée avec de l'eau, de même teneur en lactose. Le panel de dégustateurs a trouvé que la composition selon l'invention avait une douceur et un goût bien plus agréables que le lait maigre pasteurisé ou recombiné.

### Exemple 2

On produit une composition contenant 23% de matières solides non grasses et 10% de matière grasse en homogénéisant des quantités appropriées de mélange rétentat/lactose de l'exemple 1 et de crème stérilisée par UHT à 35% de matière grasse, puis en stérilisant l'homogénéisat en autoclave.

Une dégustation de la composition obtenue a montré qu'elle avait une douceur supérieure à un lait évaporé traditionnel de même teneurs en matières solides non grasses et en matière grasse, encore plus marquée que dans le cas d'un lait non concentré.

### Exemple 3

On pasteurise 250 l de lait maigre à 72°C pendant 14 s et on le concentre par microfiltration comme à l'exemple 1 jusqu'à un rapport volumique lait/rétentat de 3. A ce stade, on procède à la diafiltration du rétentat contre l'eau déminéralisée jusqu'à production de 250 l de perméat. On cesse alors l'introduction d'eau déminéralisée, puis on concentre le rétentat jusqu'à un volume final de 40 l. Après addition de lactose dans les proportions solides de rétentat/solides de lactose de 0,442/0,558 jusqu'à complète dissolution du lactose, on sèche le mélange par pulvérisation.
La poudre obtenue a la composition indiquée dans le tableau 2 ci-après.

**Tableau 2**

| **Constituant** | **% des matières solides totales** | |
|---|---|---|
| | Exemple 3 | Lait maigre |
| Protéine (N x 6,38) | 35 | 35 |
| Matière grasse | 1 | 1 |
| Lactose | 57,5 | 51,9 |
| Cendres | 3,5 | 7,8 |
| Citrate | 0,3 | 1,7 |

| Cendres, dont | | |
|---|---|---|
| Calcium | 1,1 | 1,3 |
| Phosphore | 0,7 | 1,0 |
| Potassium | 0,2 | 1,6 |
| Sodium | 0,04 | 0,6 |

Après reconstitution avec de l'eau comme à l'exemple 1, respectivement après addition de crème comme à l'exemple 2, la composition liquide obtenue à partir de la poudre avait une douceur et un goût bien plus agréables que le lait maigre pasteurisé ou recombiné de même teneur en solides non gras, respectivement que le lait entier de mêmes teneurs en solides non gras et en matière grasse.

### Exemple 4

On traite thermiquement 250 l de lait maigre à 135°C pendant 21 s dans une installation UHT. Ce traitement provoque une dénaturation presque complète des protéines de lactosérum. On procède alors à la microfiltration avec diafiltration du lait ainsi traité comme à l'exemple 3, puis on concentre le rétentat jusqu'à 1/6 du volume initial de lait. Une analyse des protéines totales contenues dans le rétentat montre que l'on obtient 6,11 kg de protéines alors que l'on en obtient 5,65 kg par le procédé de l'exemple 3. On peut en conclure que la rétention des protéines de lactoséruma a été nettement améliorée par le traitement thermique du lait. On ajuste ensuite la teneur en lactose, puis on sèche le mélange comme indiqué dans l'exemple 3.

La poudre obtenue a la composition indiquée dans le tableau 3 ci-après.

**Tableau 3**

| **Constituant** | **% des matières solides totales** | |
|---|---|---|
| | Exemple 4 | Lait maigre |
| Protéine (N x 6,38) | 35 | 35 |
| Matière grasse | 1 | 1 |
| Lactose | 56,4 | 51,9 |
| Cendres | 3,4 | 7,8 |
| Citrate | 0,3 | 1,7 |

| Cendres, dont | | |
|---|---|---|
| Calcium | 1,0 | 1,3 |
| Phosphore | 0,7 | 1,0 |
| Potassium | 0,2 | 1,7 |
| Sodium | 0,04 | 0,6 |

Après reconstitution avec de l'eau comme à l'exemple 1, respectivement après addition de crème comme à l'exemple 2, la composition liquide obtenue à partir de la poudre avait les mêmes qualités de douceur et de goût que les compositions des exemples 1, 2 et 3. Ceci signifie que la présence de protéines de lactosérum dénaturées dans le rétentat n'affecte en rien les qualités organoleptiques de la composition, le rendement protéique étant par ailleurs augmenté.

### Exemple 5

On pasteurise du lait maigre à 72°C pendant 15 s, puis on le concentre par microfiltration sur membrane minérale de dimension nominale de pores de 0,2 micron, jusqu'à un volume de rétentat de 1/6 du volume de lait entrant. On diaflitre ensuite le rétentat à volume constant avec 3x son volume d'eau déminéralisée, puis on le concentre à 20% de matières sèches. On stérilise alors le rétentat à 135°C pendant 20 s par UHT et on le place dans une cuve stérile.

Séparément, on dissout du lactose dans de l'eau déminéralisée, à 80°C et à la concentration de 60%, c'est à dire maximale possible. Le lactose n'est pas entièrement dissout, mais sa dissolution complète est obtenue lorsqu'on le traite ensuite par UHT à 135°C pendant 30 s. Après stérilisation, on entrepose le lactose dans une cuve stérile.

On mélange alors aseptiquement le rétentat et la solution de lactose dans des proportions correspondant, pour 87% de protéines sur les solides totaux du rétentat, à 40% de solides de rétentat pour 60% de solides de lactose. Ce mélange s'effectue sous agitation à 50-60°C. On ajoute ensuite à ce mélange de la crème à 35% de matière grasse, stérilisée au préalable par UHT, en quantité appropriée pour obtenir 23% de solides non gras pour 10% de matière grasse, à 50-55°C. On ajuste alors le pH à 6,8-6,9 (déterminé à 50-60°C) par addition d'une dispersion aqueuse d'hydroxyde de calcium, si celui-ci n'a pas déjà cette valeur.

On homogénéise ensuite le mélange à 50-55°C en deux étages, le premier à 15 MPa et le second à 3 MPa, puis on le post-stérilise à 140°C pendant 5 s et on le conditionne aseptiquement dans des emballages.

La composition laitière a une luminosité de 84,55 (valeur L mesurée par spectophotométrie sur Macbeth 2000) et 5,83 % de lysine bloquée. Par comparaison, un lait évaporé du commerce a une luminosité de 75,49 L et 36,98 % de lysine bloquée.

### Exemple 6

On procède comme à l'exemple 5 mis à part la post-stérilisation que l'on effectue en autoclave à 120°C pendant 2 min après avoir conditionné le produit dans des récipients hermétiques.

La composition laitière a une luminosité de 80,77 L et 13,84 % de lysine bloquée.

## Revendications

1. Procédé de préparation d'une composition laitière à base des constituants naturels du lait, contenant, en poids des matières sèches non grasses, 33 à 36 % de protéine, 48 à 58 % de lactose et 3 à 5 % de minéraux et que parmi les minéraux le calcium a une teneur de 75 à 100 % de celle du lait, le phosphore de 50 à 75 % de celle du lait, le sodium et le potassium chacun de 5 à 20 % de celles du lait et les citrates de 10 à 30% de celle du lait, caractérisé par le fait que l'on concentre un lait écrémé par microfiltration jusqu'à un facteur de 3 à 6 fois en volume et que l'on dissout dans le rétentat une quantité de lactose correspondant, en poids, à environ la quantité de matières sèches du rétentat.

2. Procédé selon la revendication 1, caractérisé par le fait que l'on sèche le mélange liquide de rétentat et de lactose par pulvérisation ou lyophilisation.

3. Procédé selon la revendication 1, caractérisé par le fait que l'on ajoute au mélange liquide de rétentat et de lactose avec de la crème préalablement stérilisée, on homogénéise le mélange, puis on le conditionne hermétiquement dans des récipients et on stérilise les récipients.

4. Procédé selon la revendication 1, caractérisé par le fait que l'on stérilise séparément le rétentat et une solution aqueuse de lactose, on mélange aseptiquement le rétentat et la solution de lactose, on y ajoute de la matière grasse lactique préalablement stérilisée, on homogénéise le mélange et on le conditionne aseptiquement dans des emballages.

5. Procédé selon la revendication 4, caractérisé par le fait qu'avant le conditionnement, on stérilise le mélange dans des conditions thermiques modérées.

6. Procédé selon la revendication 1, caractérisé par le fait que l'on stérilise séparément le rétentat et une solution aqueuse de lactose, on mélange aseptiquement le rétentat et la solution de lactose, on y ajoute de la matière grasse lactique préalablement stérilisée, on homogénéise le mélange et on conditionne le mélange homogénéisé dans des récipients que l'on ferme hermétiquement, puis que l'on stérilise dans des conditions thermiques modérées.

## Claims

1. Process for preparing a dairy composition based on natural constituents of milk, containing, by weight of non-fat solids, 33 to 36% protein, 48 to 58% lactose and 3 to 5% minerals and amongst the minerals, the calcium content being 75 to 100% of that of milk, the phosphorus content being 50 to 75% of that of milk, the sodium and potassium content being each 5 to 20% of that of milk and the citrate content being 10 to 30% of that of milk, characterized in that skimmed milk is concentrated by microfiltration to a factor of 3 to 6 times by volume and that, in the retentate, a quantity of lactose is dissolved corresponding, by weight, to approximately the quantity of dry matter in the retentate.

2. Process according to Claim 1, characterized in that the liquid mixture of retentate and lactose is dried by atomization or freeze drying.

3. Process according to Claim 1, characterized in that previously sterilized cream is added to the liquid mixture of retentate and lactose, the mixture is homogenized, and it is then packed hermetically in containers and the containers are sterilized.

4. Process according to Claim 1, characterized in that the retentate and an aqueous solution of lactose are sterilized separately, the retentate and lactose solution are mixed aseptically, previously sterilized milk fat is added thereto, the mixture is homogenized and it is packed aseptically in packages.

5. Process according to Claim 4, characterized in that, before packaging, the mixture is sterilized under moderate conditions of heat.

6. Process according to Claim 1, characterized in that the retentate and an aqueous solution of lactose are sterilized separately, the residue and lactose solution are mixed aseptically, previously sterilized milk fat is added thereto, the mixture is homogenized and the homogenized mixture is packed in containers which are closed hermetically and are then sterilized under moderate conditions of heat.

## Patentansprüche

1. Verfahren zur Herstellung einer Milchzusammensetzung auf der Basis der natürlichen Bestandteile der Milch, die, bezogen auf das Gewicht der nichtfetten Trockenmasse, 33 bis 36 % Protein, 48 bis 58 % Lactose und 3 bis 5 % Mineralstoffe enthält und die hinsichtlich der Mineralstoffe einen Calciumgehalt von 75 bis 100 % von dem der Milch, einen Phosphorgehalt von 50 bis 75 % von dem der Milch, einen Natriumgehalt und einen Kaliumgehalt von jeweils 5 bis 20 % von denen der Milch und einen Gehalt an Citraten von 10 bis 30 % von dem der Milch hat, dadurch gekennzeichnet, daß man eine entrahmte Milch durch Mikrofiltration auf ein Drittel bis ein Sechstel des Volumens konzentriert und daß man im Retentat eine Lactosemenge löst, die, bezogen auf das Gewicht, ungefähr der Trockenmassemenge des Retentats entspricht.

2. Verfahren nach Anspruch 1, dadurch gekennzeichnet, daß man die flüssige Retentat- und Lactosemischung durch Sprühtrocknung oder Gefriertrocknung trocknet.

3. Verfahren nach Anspruch 1, dadurch gekennzeichnet, daß man der flüssigen Retentat- und Lactosemischung Rahm beigibt, der zuvor sterilisiert wurde, die Mischung homogenisiert und sie dann in Behältern luftdicht verpackt und die Behälter sterilisiert.

4. Verfahren nach Anspruch 1, dadurch gekennzeichnet, daß man das Retentat und eine wässrige Lactoselösung getrennt sterilisiert, das Retentat und die Lactoselösung keimfrei mischt, Milchfett beigibt, das zuvor sterilisiert wurde, die Mischung homogenisiert und keimfrei in Verpackungen verpackt.

5. Verfahren nach Anspruch 4, dadurch gekennzeichnet, daß man die Mischung vor dem Verpacken bei milden thermischen Bedingungen mischt.

6. Verfahren nach Anspruch 1, dadurch gekennzeichnet, daß man das Retentat und eine wässrige Lactoselösung getrennt sterilisiert, das Retentat und die Lactoselösung keimfrei mischt, Milchfett beigibt, das zuvor sterilisiert wurde, die Mischung homogenisiert, die homogenisierte Mischung in Behältern verpackt, die luftdicht verschlossen werden, und dann bei milden thermischen Bedingungen sterilisiert.
